# EUROPÄISCHE PATENTSCHRIFT

(11) **EP 0 799 161 B1**
(45) Veröffentlichungstag und Bekanntmachung des Hinweises auf die Patenterteilung: **20.05.1998**
(21) Anmeldenummer: 95942702.2
(22) Anmeldetag: 19.12.1995
(51) Int. Cl.: C02F 9/00, C02F 1/62, C02F 1/66

(54) **VERFAHREN ZUR BEHANDLUNG VON THALLIUM ENTHALTENDEM ABWASSER**
PROCESS FOR TREATING WASTE WATER CONTAINING THALLIUM
PROCEDE DE TRAITEMENT D'EAUX USEES CONTENANT DU THALLIUM

(30) Priorität: 20.12.1994 DE 4445481
(43) Veröffentlichungstag der Anmeldung: 08.10.1997
(73) Patentinhaber: M.I.M. Hüttenwerke Duisburg Gesellschaft mit Beschränkter Haftung, 47249 Duisburg (DE)
(72) Erfinder: DOBISCH, Joachim, D-47906 Kempen (DE); STEIL, Hans-Ulrich, D-40489 Düsseldorf (DE); WALK, Hartmut, D-47198 Duisburg (DE)
(74) Vertreter: Weidener, Jörg Michael, Dipl.-Ing.
(86) Internationale Anmeldenummer: EP9505033
(87) Internationale Veröffentlichungsnummer: WO9619413

(56) Entgegenhaltungen:
- PATENT ABSTRACTS OF JAPAN vol. 13 no. 124 (C-580) ,27.März 1989 & JP,A,63 294986 (MIYOSHI OIL & FATS) 1.Dezember 1988,

## Beschreibung

Die Erfindung betrifft ein Verfahren zur selektiven Abtrennung von Thallium aus, insbesondere bei der oxidierenden Laugung von bei der metallurgischen Verarbeitung sulfidischer Erze anfallenden Flugstäuben gebildetem, Thallium, sowie mehrere der Metalle Zink, Blei, Cadmium, Kupfer, Arsen, Selen, Tellur enthaltendem Abwasser, dem in einer ersten Verfahrensstufe zur Neutralisationsfällung der Metalle Zink, Blei, Cadmium, Kupfer, Arsen, Selen, Tellur Alkalicarbonat- und/oder Alkalihydroxid in einer Konzentration von 50 bis 550 g/l zugegeben werden und der entstandene Niederschlag vom Abwasser abgetrennt wird.

Aus der JP, A, 63 294986 ist bereits ein Verfahren zur Behandlung von Schwermetalle wie Zink, Blei, Kupfer, Arsen enthaltenen Abwässern bekannt, wobei in einer ersten Stufe dem Abwasser ein Alkalihydroxid zugegeben wird und wobei sich ein Niederschlag bildet, der dann abgetrennt wird. Danach wird dem behandelten und leicht alkalischem Abwasser Natriumsulfid zugesetzt, um die restlichen Schwermetalle abzutrennen.

Die Aufgabe der vorliegenden Erfindung liegt darin, ein wirtschaftliches und umweltfreundliches Verfahren zur Behandlung von metallhaltigem Abwasser der eingangs angeführten Zusammensetzung bereitzustellen, mit dem die Konzentration der Metalle unter die in Umweltgesetzen, beispielsweise § 7a Wasserhaushaltsgesetz, Anhang 39 der Rahmen-Abwasser VwV herausgegeben vom Bundesminister für Umwelt, Naturschutz und Reaktorsicherheit und der Länder-Arbeitsgemeinschaft Wasser, Gemeinsames Ministerialblatt, Seite 518 vom 8. September 1989 vorgeschriebenen Grenzen für Metalle im einleitbaren Abwasser gesenkt werden kann. Insbesondere soll die selektive Abtrennung von Thallium aus dem Abwasser möglich sein.

Die Aufgabe der vorliegenden Erfindung wird durch im Patentanspruch 1 genannten Maßnahmen gelöst. Die Unteransprüche 2 und 3 stellen vorteilhafte Verfahrensmaßnahmen dar.

Bei der Erfindung ist festgestellt worden, daß zwar mit einer Reihe von Anionen wie Chromat, Jodid, Sulfid und Carbonat Thallium aus thalliumhaltigen Lösungen, vorzugsweise aus Abwässern von Auslaugungsprozessen von Flugstäuben aus der NE-Metallurgie, in Gegenwart von Zink, Blei, Cadmium, Arsen, Selen und Quercksilber-Ionen bewirkt werden kann. Eine ausreichende Fällung ergibt sich jedoch nur mit Sulfid. Werden Thallium-Ionen mit Sulfidierungsmitteln als Sulfid gefällt, erfolgt eine Rücklösung des Thalliumsulfids in derartigen Lösungen aus oxidierenden Laugeprozessen.

Mit dem erfindungsgemäßen Verfahren wird Thallium als Thalliumsulfid gefällt und abgetrennt, bevor eine Rücklösung des Thalliumsulfids erfolgen kann. Der Vorteil des erfindungsgemäßen Verfahrens liegt darin, daß die Konzentration an Thallium in der wäßrigen Lösung unter die durch Umweltauflagen geforderte Restionenkonzentration für Thallium gesenkt werden kann. Ein weiterer großer Vorteil der vorliegenden Erfindung liegt darin, daß Thallium selektiv von anderen Metallen abgetrennt und einer gezielten Weiterverwendung in Form von Thalliumsulfid zugeführt werden kann. Die Trennung des Niederschlags erfolgt unmittelbar am Ende der Fällung so schnell wie technisch möglich.

Als anorganisches Sulfid wird Natriumsulfid und als organisches Sulfid Trimercaptotriazin, Natriumdithiocarbaminat oder ein Gemisch davon verwendet. Mit diesen Fällungsreagenzien wird eine sehr gute Fällung der in der Lösung vorhandenen Metalle als Metallsulfide erhalten.

Die Verwendung von Natriumsulfid verursacht die geringsten Kosten. Deswegen ist Natriumsulfid für die Thalliumfällung als Thalliumsulfid gut geeignet. Bei der Verwendung von Natriumsulfid werden insbesondere sehr gute Ergebnisse bei der Rücklösung von Thalliumsulfid erreicht. Die besten Fällungsergebnisse und die geringste Rücklösung von Thalliumsulfid werden mit den organischen Sulfiden erreicht.

Die Erfindung wird anhand eines Beispiels näher erläutert.

### Beispiel

1 1 einer wäßrigen Lösung einer mit Wasser durchgeführten oxidierenden Laugung von Elektrofilterstaub einer Sinteranlage wurde in der ersten Stufe mit Natriumcarbonat gefällt. Die wäßrige Lösung hatte vor der Fällung einen pH-Wert von 6 und wies die folgenden Konzentrationen an Metallen auf:

| | |
|---|---|
| Zn | 3 g/l |
| Pb | 0,2 g/l |
| Cd | 6 g/l |
| Cu | 0,5 mg/l |
| Fe | 0,8 mg/l |
| As | 0,2 mg/l |
| Tl | 150 mg/l |
| Se | 4 mg/l |
| Te | 1 mg/l |
| Cl | 6 g/l |
| F | 100 mg/l |
| SO | 3 g/l |

Die wäßrige Lösung wurde mit 10 g Natriumcarbonat in 50 ml Wasser versetzt. Ein Niederschlag von 20 g wurde abgetrennt. Die wäßrige Lösung wies einen pH-Wert von 10 auf. Die Metalle hatten in der Lösung die folgenden Konzentrationen:

| | |
|---|---|
| Zn | 0,4 mg/l |
| Pb | 0,2 mg/l |
| Cd | 0,081 mg/l |
| Cu | < 0,01 mg/l |
| Fe | 0,10 mg/l |
| As | 0,03 mg/l |
| Tl | 77,7 mg/l |
| Se | 1,8 mg/l |
| Te | < 0,1 mg/l |

Die Lösung, die etwa 1 1 betrug, wurde dann mit einer wäßrigen Lösung mit 2-fachem stöchiometrischen Überschuß an Natriumsulfid, bezogen auf gelöstes Thallium, versetzt und die Lösung 15 min gerührt. Dabei bildete sich ein Niederschlag von 100 mg, der folgende Zusammensetzung hatte:

| | |
|---|---|
| Zn | 0,2 mg |
| Pb | 0,05 mg |
| Cd | 0,06 mg |
| Cu | < 0,01 mg |
| Fe | < 0,02 mg |
| As | < 0,02 mg |
| Tl | 77,6 mg |
| Se | 0,07 mg |
| Te | < 0,02 mg |

Der Niederschlag wurde nach der Reaktionszeit sofort abfiltriert. Die überstehende Lösung hatte die folgende Zusammensetzung:

| | |
|---|---|
| Zn | 0,2 mg/l |
| Pb | < 0,1 mg/l |
| Cd | < 0,C1 mg/l |
| Cu | < 0,01 mg/l |
| Fe | < 0,1 mg/l |
| As | < 0,02 mg/l |
| Tl | < 0,1 mg/l |
| Se | 0,1 mg/l |
| Te | < 0,1 mg/l |

Die Lösung konnte als Abwasser entsorgt werden.

## Patentansprüche

1. Verfahren zur selektiven Abtrennung von Thallium aus, insbesondere bei der oxidierenden Laugung von bei der metallurgischen Verarbeitung sulfidischer Erze anfallenden Flugstäuben gebildetem, Thallium, sowie mehrere der Metalle Zink, Blei, Cadmium, Kupfer, Arsen, Selen, Tellur enthaltendem Abwasser, dem in einer ersten Verfahrensstufe zur Neutralisationsfällung der Metalle Zink, Blei, Cadmium, Kupfer, Arsen, Selen, Tellur Alkalicarbonat- und/oder Alkalihydroxidlösung in einer Konzentration von 50 bis 550 g/l zugegeben werden und der entstandene Niederschlag vom Abwasser abgetrennt wird und wobei in einer zweiten Verfahrensstufe dem auf einen pH-Wert von 7,5 bis 10,5 und einer Temperatur von 10 bis 40° C eingestellten Abwasser zur Fällung des Thalliums eine Lösung von anorganischem und/oder organischem Sulfid mit einer Konzentration von 5 bis 20 Gew-% mit einem stöchiometrischen Überschuß von 30 bis 300 % zugesetzt und der entstandene Niederschlag unmittelbar am Ende der Fällung von dem Abwasser abgetrennt wird.

2. Verfahren nach Anspruch 1, dadurch gekennzeichnet, daß zur Neutralisation Natriumcarbonat, Kalkmilch sowie Natronlauge verwendet werden.

3. Verfahren nach Anspruch 1, dadurch gekennzeichnet, daß zur Sulfidfällung Natriumsulfid und Trimercaptotriazin und Natriumdithiocarbaminat verwendet werden.

## Claims

1. A process for the selective separation of thallium from waste water, which is formed in particular during the oxidising leaching of fine dusts arising during the metallurgical processing of sulphide ores and which contains thallium as well as a plurality of the metals zinc, lead, cadmium, copper, arsenic, selenium and tellurium, to which waste water, in a first process step, alkali carbonate and/or alkali hydroxide solution having a concentration of 50 to 550 g/l is added for the neutralisation precipitation of the metals zinc, lead, cadmium, copper, arsenic, selenium and tellurium, and the resulting precipitate is separated from the waste water, and wherein in a second process step a solution of inorganic and/or organic sulphide having a concentration of 5 to 20 % by weight is added, in a stoichiometric excess of 30 to 300 %, to the waste water which is adjusted to a pH of 7.5 to 10.5 and a temperature of 10 to 40°C to precipitate the thallium, and the resulting precipitate is immediately separated from the waste water at the end of the precipitation.

2. A process according to claim 1, characterised in that sodium carbonate, milk of lime as well as caustic soda are used for neutralisation.

3. A process according to claim 1, characterised in that sodium sulphide and trimercaptotriazine and sodium dithiocarbamate are used for sulphide precipitation.

## Revendications

1. Procédé pour la séparation sélective de thallium à partir d'eaux usées contenant du thallium qui s'est formé en particulier lors de la lixiviation oxydante de poussières volantes que l'on obtient lors du traitement métallurgique de minerais sulfurés, ainsi que plusieurs métaux parmi le zinc, le plomb, le cadmium, le cuivre, l'arsenic, le sélénium, le tellure, eaux usées auxquelles on ajoute, dans une première étape opératoire, à des fins de précipitation par neutralisation des métaux de zinc, de plomb, de cadmium, de cuivre, d'arsenic, de sélénium, de tellure, une solution de carbonates de métaux alcalins et/ou d'hydroxydes de métaux alcalins en une concentration de 50 à 550 g/l, et on sépare des eaux usées le précipité obtenu, et dans lequel, dans une deuxième étape opératoire, on ajoute aux eaux usées dont on a réglé le pH à une valeur de 7,5 à 10,5 et la température à une valeur de 10 à 40°C, à des fins de précipitation du thallium, une solution de sulfure inorganique et/ou organique en une concentration de 5 à 20% en poids avec un excès stoechiométrique de 30 à 300%, et on sépare des eaux usées le précipité obtenu, immédiatement à la fin de la précipitation.

2. Procédé selon la revendication 1, caractérisé en ce qu'on utilise pour la neutralisation, du carbonate de sodium, du lait de chaux et de la soude caustique.

3. Procédé selon la revendication 1, caractérisé en ce qu'on utilise, pour la précipitation au sulfure, du sulfure de sodium et de la trimercaptotriazine et du dithiocarbamate de sodium.
